# EUROPÄISCHE PATENTSCHRIFT

(11) **EP 2 797 775 B1**
(45) Veröffentlichungstag und Bekanntmachung des Hinweises auf die Patenterteilung: **23.03.2016**
(21) Anmeldenummer: 12813038.2
(22) Anmeldetag: 27.12.2012
(51) Int. Cl.: B60R 19/34, F16F 7/12, B60R 21/34

(54) **FUSSGÄNGERSCHUTZEINRICHTUN UND VERFAHREN MIT ADAPTIVEN ABBAU VON CRASHENERGIE**
PEDESTRIAN PROTECTION DEVICE AND METHOD WITH ADAPTIVE DEGENERATION OF CRASH ENERGY
DISPOSITIF ET PROCÉDÉ DE PROTECTION DES PIÉTONS AVEC UNE DÉGRADATION ADAPTATIVE DE L'ÉNERGIE D'UN CRASH

(30) Priorität: 27.12.2011 DE 102011089992
(43) Veröffentlichungstag der Anmeldung: 05.11.2014
(73) Patentinhaber: Robert Bosch GmbH, 70442 Stuttgart (DE)
(72) Erfinder: WOLKENSTEIN, Maja, 74343 Sachsenheim (DE); D'ADDETTA, Gian, Antonio, 70176 Stuttgart (DE); kOLATSCHEK, Josef, 71263 Weil Der Stadt (DE)
(86) Internationale Anmeldenummer: PCT/EP2012/076920
(87) Internationale Veröffentlichungsnummer: WO 2013/098303

(56) Entgegenhaltungen:
- EP-A1- 2 360 065
- DE-A1-102010 002 571
- DE-A1-102010 002 904

## Beschreibung

### Stand der Technik

Die vorliegende Erfindung bezieht sich auf eine Personenschutzvorrichtung für ein Fahrzeug mit einer Fußgängerschutzeinrichtung, auf ein Verfahren zum Einsetzen einer mit einer Personenschutzvorrichtung für ein Fahrzeug koppelbaren und/oder gekoppelten Fußgängerschutzeinrichtung, auf ein entsprechendes Steuergerät sowie auf ein entsprechendes Computerprogrammprodukt.

Moderne Fahrzeuge besitzen eine Frontstruktur, deren Aufgabe es ist, die bei einer Kollision auftretende Energie in einer solchen Weise zu absorbieren, dass die Verletzungsgefahr für die Insassen deutlich gemindert ist. Üblicherweise geschieht diese Energieabsorption durch die Verformung der entsprechenden Komponenten im Vorbau des Fahrzeuges (Knautschzone). Entsprechend einer Schwere der Kollision wird daher auch die Frontstruktur in höherem oder geringerem Ausmaß verformt. Nun ist es ein Bestreben, die Kosten für eine Reparatur bei Kollisionen mit geringer Schwere möglichst niedrig zu halten. Aus diesem Grund wird eine solche Unterteilung der Fahrzeugstruktur vorgenommen, dass bei geringfügigen Kollisionen lediglich ein kleiner, genau umrissener Teil der Frontstruktur, auch Crashbox genannt, deformiert wird. Dagegen ist bei Kollisionen mit höherer Schwere die gesamte Frontstruktur am Energieabbau beteiligt. Dieses Vorgehen hat den Vorteil, dass bei Kollisionen mit geringer Schwere auch nur diese Crashbox ersetzt wird bzw. Crashboxen ersetzt werden, während die anderen Komponenten unbeschädigt bleiben. Um dieses Verhalten zu erreichen, wird allerdings das Energieabsorptionsvermögen der Crashbox absichtlich relativ niedrig angesetzt. Dies bringt im Falle einer Kollision niedriger Schwere keinen Nachteil und sorgt gleichzeitig dafür, dass die restliche Frontstruktur nicht parallel mit deformiert wird. Bei hoher Kollisionsschwere ist es allerdings so, dass hier nicht der optimale Anteil an Energie absorbiert wird. Daher muss der restliche Teil der Struktur für diesen Fall diesen Nachteil ausgleichen und entsprechend massiver aufgebaut sein.

Die EP 1 792 786 A2 zeigt eine Crashbox zur Eingliederung zwischen einem Stoßfängerquerträger und einem Fahrzeuglängsträger eines Kraftfahrzeugs. Die Crashbox weist ein gehäuseartiges Deformationsprofil als Faltkonstruktion aus Metallblech und eine längsträgerseitige Flanschplatte auf, dadurch gekennzeichnet, dass die Flanschplatte als Bestandteil der Faltkonstruktion ausgebildet ist.

EP 2 360 065 offenbart eine Personenschutzvorrichtung nach dem Oberbegriff des Anspruchs 1.

Des Weiteren ist bei Fahrzeugen auch der Fußgängerschutz bekannt. Fußgängerschutzsysteme werden in zwei Kategorien eingeteilt. Zum einen gibt es passive Systeme, die ausschließlich mit Strukturmaßnahmen wie etwa einem "weichen" Frontend und genügend Verformungsraum zwischen Motorhaube und Motor den Aufprall abmildern. Zum anderen werden aktive Systeme eingesetzt. Diese registrieren mit Sensoren den Aufprall eines Fußgängers. Dann lösen sie mit Aktuatoren die Schutzmaßnahmen aus, z. B. ein Anheben der Motorhaube. Man unterscheidet zwischen reversiblen (mit Magnetschalter ausgelösten) und irreversiblen (mit Pyrotechnik ausgelösten) Aktuatoren. Besonders ein irreversibles System erfordert sehr zuverlässig auslösende Sensoren und Algorithmen, während reversible Aktuatoren auch mit einfacheren Erkennungstechniken kombinierbar sind. Die aktiven Schutzsysteme müssen bei Funktionstests drei Hauptanforderungen genügen. Erstens müssen die gesetzlichen Vorgaben erfüllt werden. Zweitens müssen Sensoren und Auswertealgorithmen die verschiedenen Dummys - sechsjähriges Kind, 5-%-, 50-%- und 95-%-Erwachsener - einwandfrei klassifizieren, und drittens muss eine Erkennung anderer Hindernisse wie Vögel, Mülltonnen oder aufgewirbelte Steine möglich sein, um Fehlauslösungen zu vermeiden.

Die Europäische Union forciert den Fußgängerschutz durch die Verordnung 2003/102/EC, die seit dem 1. Januar 2004 in Kraft ist. Dort sind vier verschiedene Aufprallszenarien mit unterschiedlichen Parametern detailliert definiert. In einem ersten Szenario prallt ein dem Unter- oder Oberschenkel (je nach Körpergröße des simulierten Kindes oder Erwachsenen) nachempfundener Impaktor auf den Stoßfänger, in einem zweiten Szenario prallt ein Oberschenkel-Impaktor auf die vordere Kante der Motorhaube, und in einem dritten und vierten Szenario kollidiert ein Kinderkopf- bzw. ein Erwachsenen-Impaktor auf die Motorhaube. Die Impaktoren sind jeweils mit Sensoren bestückt. Für die beim Aufprall auf die Körperpartien wirkenden Kräfte sind Höchstwerte festgelegt. Die Verordnung schreibt vor, dass - ab Oktober 2005 beginnend - bis Ende 2012 jede neue Fahrzeugplattform für Pkw und leichte Nutzfahrzeuge mit weniger als 2,5 Tonnen Gesamtgewicht die Anforderungen der Unterschenkel- und Kinderkopf-Tests erfüllen muss. Seit September 2010 läuft die Phase zwei. Hier müssen die Spezifikationen für den Oberschenkelaufprall und den Kopf eines Erwachsenen bis September 2015 ebenfalls komplett erfüllt werden.

### Offenbarung der Erfindung

Vor diesem Hintergrund wird mit der vorliegenden Erfindung eine Personenschutzvorrichtung für ein Fahrzeug mit einer Fußgängerschutzeinrichtung, ein Verfahren zum Einsetzen einer mit einer Personenschutzvorrichtung für ein Fahrzeug koppelbaren Fußgängerschutzeinrichtung, weiterhin ein Steuergerät, das Schritte dieses Verfahrens in entsprechenden Einheiten verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Den oben aufgeführten Nachteil des niedrigen Energieabsorptionsvermögens von Crashboxen vermeiden solche Frontstrukturen, die ein veränderbares Energieabsorptionsniveau besitzen und sich entsprechend auf die Schwere der Kollision einstellen können. Deswegen werden derartige Strukturen auch als adaptive Crashstrukturen bezeichnet.

Eine adaptive Crashstruktur kann auf Basis eines Verjüngungsabsorbers arbeiten. Hier wird bei einer Kollision ein Deformationselement, z.B. ein Rohr, durch eine oder mehrere in einem Gehäuse angeordnete Matrizen geschoben und dabei verformt bzw. verjüngt, um so die Aufprallenergie wirkungsvoll abzubauen. Durch eine wirksame Zu- und Abschaltung von Matrizenplatten kann der Verjüngungsdurchmesser variiert und somit eine Steifigkeit der Crashstruktur angepasst werden. Beispielsweise kann eine für eine zweite Verjüngungsstufe der Struktur verwendete Matrize ausrückbar sein, d.h., bei Wegnahme einer Abstützung durch eine Radialkraft des Deformationselements nach außen gedrückt werden. Das Kraftniveau der Crashstruktur ist somit niedriger und es wird weniger Aufprallenergie abgebaut.

Beispiele für eine Umsetzung des Prinzips einer adaptiven Crashstruktur finden sich z.B. in einer Crashstruktur mit adaptiver Energieaufnahme durch ein Entfernen von Versteifungsrippen durch Schneidearbeit oder durch Verjüngung. Eine adaptive Crashbox kann einen integrierten Drucksensor aufweisen oder alternativ eine Sensorkonfiguration, die mit Hilfe von zwei Beschleunigungssensoren eine Soll-Steifigkeit der adaptiven Crashbox bestimmt und auch die Rückhaltemittel der passiven Sicherheit auslöst. Es besteht in diesem Zusammenhang die Möglichkeit einer Umsetzung einer schnellen und genauen Aktuatorik für eine in der Steifigkeit veränderbare Crashstruktur.

Insbesondere kann eine bereits bestehende "adaptive Crashstruktur" nach dem Verjüngungsprinzip durch eine Fußgängerschutzfunktion erweitert werden, indem durch ein aktives Zurückziehen einer Frontstruktur eines Fahrzeugs die Verletzungsschwere für den Fußgänger reduziert werden kann.

Gemäß dem hier vorgestellten Ansatz kann eine Verbesserung des Fußgängerschutzes erzielt werden, indem durch ein aktives, auf den Stoßfänger wirkendes Element eine Minderung der bei einer Kollision zwischen Fußgänger und Fahrzeug auftretenden Kontaktkräfte realisiert werden kann. Bemerkenswert an diesem Ansatz ist vor allem die mögliche Kombination einer derartigen Fußgängerschutzeinrichtung mit der Adaptiven Crash-Struktur (ACS).

Im Gegensatz zu herkömmlichen im Stoßfänger untergebrachten Fußgängerschutzsystemen, wie z.B. dem "weichen Frontend", kann bei dem hier vorgestellten Ansatz die Schutzwirkung nicht mehr nur hauptsächlich durch eine Formgebung der Vorderfront der Fahrzeugstruktur und einer Polsterung, z.B. durch Einbau von Schaum oder anderen Kunststoffelementen im potentiellen Kontaktbereich des Fahrzeugs mit einem Fußgänger, entfaltet werden. So können Einschränkungen der Designfreiheit bei dem Entwurf von Fahrzeugfronten vermieden werden. Auch kann Bauraum, der für die Polsterung extra vorgesehen werden müsste und insgesamt zu einer Verlängerung des Fahrzeuges führen würde, eingespart werden. Da das aktive Element den Stoßfänger im Augenblick des Kontakts mit dem Fußgänger zurückzieht und diese Rückzugsgeschwindigkeit im weiteren Verlauf gemindert wird, wirkt das hier vorgeschlagene System de facto wie eine Polsterung, z.B. mit aufgeschäumtem Kunststoff, der bei Deformation einen ähnlichen Kraft-Weg-Verlauf aufweisen kann, ohne allerdings dessen Nachteile zu besitzen. Auch kann mit dem hier vorgeschlagenen Ansatz der Nachteil überwunden werden, dass aus Kunststoff aufgebaute Fußgängerschutzsysteme je nach Temperatur eine andere Charakteristik aufweisen und daher die Schutzwirkung für den Fußgänger abhängig von der Temperatur wäre. Ferner ist bei der hierin vorgeschlagenen technischen Lösung eine weitere Verbesserung oder Individualisierung der Schutzwirkung ohne Weiteres realisierbar, da im Prinzip beliebige Kraft-Weg-Charakteristiken vorgegeben werden können. Beispielsweise kann eine Individualisierung dadurch erfolgen, dass über eine geeignete Sensorik bestimmte Fußgängereigenschaften wie z. B. Größe, Masse, etc. detektiert werden und durch ein geeignetes Rechenprogramm eine für diese Merkmale optimale Kraft-Weg-Kennlinie errechnet wird und mit dieser der Aktuator beaufschlagt wird.

Mit der hier vorgestellten technischen Idee wird eine Alternative zu einer einfachen Deaktivierung einer Crashbox, d.h. einer Einstellung eines Kraftniveaus von null, geboten. Es kann wirksam verhindert werden, dass die Stoßfänger-Querträger-Baugruppe quasi frei beweglich wird und vom Fußgänger angeschoben werden kann. Somit besteht nicht länger der Nachteil, dass aufgrund einer Massenträgheit der Baugruppe eine erhebliche Kraft auf den Fußgänger ausgeübt wird. Betrüge beispielsweise die Masse 3 kg und die Fahrgeschwindigkeit 40 km/h, dann käme ein Aufprall einem Schlag mit einem 3-kg-Hammer, der mit 40 km/h bewegt wird, gleich. Mit dem hier vorgestellten erfindungsmäßigen aktiven Zurückziehen dieser Baugruppe kann dieser Massenträgheitseffekt bei der Wechselwirkung mit dem Fußgänger wirkungsvoll vermieden werden, sodass eine Belastung des Fußgängers nicht länger singulär ist, sondern "aufgerampt" werden kann.

Auch kann mit dem hier vorgestellten Ansatz darauf verzichtet werden, vor der Kollision mit dem Fußgänger die Frontstruktur zunächst etwas nach vorne zu bewegen, um nachher, während der Kollision, über einen nunmehr zur Verfügung stehenden längeren Weg die Kraft zu vermindern. So kann eine vorausschauende Sensorik einfacher ausgeführt sein oder sogar weggelassen werden, da der Fall einer zu späten Auslösung der vorausschauenden Sensorik und eines Kollidierens des Fußgängers mit einem gerade sich nach vorne bewegenden Element, was sogar eine Erhöhung der Verletzungsschwere nach sich ziehen würde, bei dem hier vorgeschlagenen Ansatz ausgeschlossen werden kann. Mit der hier vorgeschlagenen Erfindung ist ein wesentlich weniger aufwendiges System zum Fußgängerschutz umsetzbar.

Weiterhin lässt sich mit dem vorliegenden erfindungsgemäßen System die Basisfunktionalität der ACS in sinnvoller Weise mit dem Fußgängerschutz bündeln, ohne das dafür zusätzliche Sensorik notwendig wäre. Damit lässt sich ein Doppelnutzen darstellen.

Die vorliegende Erfindung schafft eine Personenschutzvorrichtung für ein Fahrzeug, mit einem Aufprallabsorber zum Aufnehmen einer Aufprallenergie, wobei der Aufprallabsorber eine Matrize, insbesondere eine nicht-ausrückbare Matrize, zum Aufnehmen und Deformieren eines Deformationselements bei einer Bewegung des Deformationselements in einer durch die Aufprallenergie bedingten Vorschubrichtung und ein Sperrelement zum Sperren der Bewegung des Deformationselements aufweist, und wobei die Personenschutzvorrichtung das folgende Merkmal aufweist:
eine mit dem Deformationselement koppelbare Fußgängerschutzeinrichtung, die ausgebildet ist, um basierend auf einer Deaktivierung des Sperrelements das Deformationselement um einen vorbestimmten Weg in der Vorschubrichtung aktiv zu bewegen.

Die Personenschutzvorrichtung kann z. B. in einem Vorderwagen des Fahrzeugs installiert sein und zum Einsatz kommen, wenn das Fahrzeug z. B. mit einem stationären Objekt oder einem beweglichen Objekt, wie beispielsweise einem weiteren Fahrzeug oder auch einem Fußgänger oder Fahrradfahrer, kollidiert. Bei dem Fahrzeug kann es sich beispielsweise um einen Pkw oder ein Nutzfahrzeug handeln. Beispielsweise kann die Personenschutzvorrichtung einen Längsträger oder Teil eines Längsträgers des Fahrzeugs ersetzen.

Der Aufprallabsorber kann ein Gehäuse mit einer Öffnung zum Aufnehmen des Deformationselements in das Gehäuse und einer der Öffnung gegenüberliegenden weiteren Öffnung für einen Austritt des Deformationselements aus dem Gehäuse aufweisen. Für die Unterbringung der nicht-ausrückbaren Matrize im Inneren des Gehäuses kann das Gehäuse eine Auswölbung aufweisen. Das Gehäuse kann das Deformationselement oder Teile desselben bei der Bewegung des Deformationselements in der Vorschubrichtung vollumfänglich umschließen. Bei dem Aufprallabsorber kann es sich um einen Verjüngungsabsorber handeln. Dieser basiert auf dem Prinzip einer Verformung, hier Verjüngung, des Deformationselements bei der Bewegung des Deformationselements in der Vorschubrichtung durch das Gehäuse und die nicht-ausrückbare Matrize, um so die Aufprallenergie aufzunehmen und abzubauen. Die Aufprallenergie hängt von einer Schwere einer sich ereignenden Kollision ab, welche wiederum auf eine Fahrgeschwindigkeit, Masse und Fahrtrichtung etc. der kollidierenden Objekte zurückzuführen ist. Weist der Aufprallabsorber neben der nicht-ausrückbaren Matrize noch eine zuschaltbare weitere Verjüngungsstufe auf, kann er als eine adaptive Crashbox realisiert werden, die in Abhängigkeit von einer ermittelten Kollisionsschwere verschiedene Steifigkeiten aufweisen kann. Entsprechend kann der Aufprallabsorber bei einer schweren Kollision unter Zuschaltung der weiteren Verjüngungsstufe eine hohe Steifigkeit aufweisen und so eine umfangreiche Verformung des Deformationselements bewirken. Entsprechend kann eine große Aufprallenergie abgebaut werden. Bei einer leichten Kollision kann der Aufprallabsorber unter Wegnahme der zweiten Verjüngungsstufe eine niedrige Steifigkeit aufweisen. Entsprechend kann die Verformung des Deformationselements gering sein, da weniger Aufprallenergie absorbiert werden muss.

Das Deformationselement kann als ein längliches Bauteil mit beispielsweise rundem Querschnitt ausgebildet sein. Ansprechend auf die Kollision kann das Deformationselement in der Vorschubrichtung entlang seiner Längsachse durch das Gehäuse des Aufprallabsorbers bewegt und dabei durch die nicht-ausrückbare Matrize aufgenommen und deformiert bzw. verjüngt werden, um die Aufprallenergie zu absorbieren.

Die nicht-ausrückbare Matrize kann beispielsweise in Form eines Ringes ausgebildet sein, dessen Öffnung zu dem Deformationselement ausgerichtet ist. Ein lichtes Maß der nicht-ausrückbaren Matrize in Ringform kann zumindest teilweise geringer als ein Querschnitt des Deformationselements vor Eintritt in einen Deformationsabschnitt bzw. Verjüngungsabschnitt der nicht-ausrückbaren Matrize sein. Eine Außenwand der nicht-ausrückbaren Matrize kann gegenüber einer Innenwand des Gehäuses abgestützt sein. Eine Innenwand der nicht-ausrückbaren Matrize kann beispielsweise ganz oder teilweise schräg verlaufen, sodass die nicht-ausrückbare Matrize eine Art Trichter bildet, der zu der Verjüngung des Deformationselements führen kann, während sich dieses aufgrund der Kollision in der Vorschubrichtung an der Innenseite der nicht-ausrückbaren Matrize entlang bewegt. Die Vorschubrichtung kann einer Fahrtrichtung des Fahrzeugs entgegengerichtet sein. Die Vorschubrichtung kann im Wesentlichen einer Aufprallrichtung auf das Fahrzeug entsprechen. Das Sperrelement kann der nicht-ausrückbaren Matrize in der Vorschubrichtung nachgelagert in dem Gehäuse des Aufprallabsorbers angeordnet sein. Das Sperrelement kann ausgebildet sein, um sich in einer Ruhestellung der Personenschutzvorrichtung in einer ersten Position zu befinden, in der es einen in der Vorschubrichtung vorderen Endbereich des Deformationselements abstützen und eine Bewegung des Deformationselements in der Vorschubrichtung verhindern kann. Dazu kann das Sperrelement zumindest teilweise ein geringeres lichtes Maß als die nicht-ausrückbare Matrize aufweisen.

Die Fußgängerschutzeinrichtung kann ausgebildet sein, um einen mit dem Fahrzeug kollidierenden Fußgänger vor ernsthaften Verletzungen zu bewahren, indem sie einen in Geschwindigkeit und Umfang möglichst optimalen Rückzug des Deformationselements und weiterer Fahrzeugstrukturen bewirkt, die der Fußgänger im Augenblick der Kollision kontaktiert. Die Bezeichnung "Fußgängerschutzeinrichtung" ist nicht als auf einen Schutz von Fußgängern beschränkt zu sehen, sondern die Schutzwirkung schließt auch z. B. mit dem Fahrzeug kollidierende andere Verkehrsteilnehmer, die einem hohen Verletzungsrisiko ausgesetzt sind, z. B. Radfahrer, oder auch die Fahrbahn kreuzende Wildtiere mit ein. Daneben kann die Fußgängerschutzeinrichtung auch bei einer leichten Kollision des Fahrzeugs mit einem unbelebten stationären Objekt sinnvoll sein. Das Sperrelement kann deaktiviert werden, indem es aus der ersten Position, in der es das Deformationselement abstützt, in eine zweite Position versetzt wird, in der es das Deformationselement freigibt. Somit können das Deformationselement und mit diesem verbundene weitere Fahrzeugstrukturen um den vorbestimmten Weg in der Vorschubrichtung bewegt werden und den verletzungsvermindernden Rückzug gegenüber dem aufprallenden Verkehrsteilnehmer vollziehen.

Die Personenschutzvorrichtung kann prinzipiell in einem Vorderwagen und/oder in einem Heck des Fahrzeugs angeordnet sein.

Gemäß einer Ausführungsform kann das Deformationselement einen vorverjüngten Bereich aufweisen. Dabei kann eine Länge des vorverjüngten Bereichs einer Länge des vorbestimmten Weges entsprechen. Ferner kann ein Durchmesser des Deformationselements in dem vorverjüngten Bereich geringer als ein lichtes Maß der nicht-ausrückbaren Matrize sein. So kann vorteilhafterweise gewährleistet werden, dass die Fußgängerschutzeinrichtung unabhängig von einem Fahrzeuginsassenschutzbereich der Personenschutzvorrichtung und somit reversibel eingesetzt werden kann.

Die Fußgängerschutzeinrichtung kann einen Aktuator aufweisen, der ausgebildet ist, um dauerhaft eine Bewegungskraft zum Bewegen des Deformationselements um den vorbestimmten Weg auf das Deformationselement auszuüben. Das Anbinden des Rohres durch das Deformationselement/Aktor mit der restlichen Struktur kann beispielsweise verhindern, dass das Rohr im Normalbetrieb aus der Matrize herausfällt. Der Aktuator kann mit dem Deformationselement verbunden oder verbindbar sein. Diese Ausführungsform bietet den Vorteil, dass ein zum Bewegen des Deformationselements erforderliches Energiepotenzial im Kollisionsfall bereits zur Verfügung steht und nicht erst hergestellt werden muss. So ist eine besonders kurze Reaktionszeit der Fußgängerschutzeinrichtung realisierbar.

Beispielsweise kann der Aktuator eine Zugfeder sein. Ein erstes Ende der Zugfeder kann an dem Deformationselement befestigbar sein, und ein zweites Ende der Zugfeder kann unter Erzeugung einer Zugspannung an einem in der Vorschubrichtung dem Deformationselement vorgelagerten Element der Personenschutzvorrichtung befestigbar sein. Ein Federweg der Zugfeder im befestigten Zustand kann dem vorbestimmten Weg des Deformationselements entsprechen. Mit der Verwendung einer Zugfeder, z. B. einer Schraubenfeder, kann ein besonders robuster und kostengünstiger Aktuator realisiert werden.

Bei einer Verwendung einer Feder oder eines Elements mit einem ähnlichen Funktionsprinzip als Aktuator kann die Fußgängerschutzeinrichtung ferner mindestens einen Stift aufweisen. Dieser kann so bezüglich der Feder anordenbar sein, dass er bei einer Deaktivierung des Sperrelements eine Kraft-Weg-Charakteristik der Feder auf eine vorbestimmte Weise beeinflusst. So kann vorteilhafterweise die Fußgängerschutzeinrichtung auf eine vorher erfasste spezifische Größe und/oder Masse des kollidierenden Verkehrsteilnehmers eingestellt werden.

Alternativ kann die Fußgängerschutzeinrichtung einen Aktuator aufweisen, der ausgebildet ist, um ansprechend auf eine Aktuierung eine Bewegungskraft zum Bewegen des Deformationselements um den vorbestimmten Weg auf das Deformationselement auszuüben. Beispielsweise kann es sich hierbei um einen pyrotechnischen, elektrischen oder magnetischen Aktuator handeln. Eine derartige Ausführungsform der vorliegenden Erfindung bietet den Vorteil, eine Möglichkeit für einen schnell ansprechenden Aktuator zu bieten. Auch kann eine zum Teil sehr gut steuerbare Kraft durch einen solchen Aktuator bereitgestellt werden.

Gemäß einem Ausführungsbeispiel kann das Sperrelement eine ausrückbare Matrize sein. Diese kann ausgebildet sein, um deaktiviert zu werden, indem sie ansprechend auf ein Aufprallsignal zum Ausrücken freigegeben wird. Die nicht-ausrückbare Matrize kann beispielsweise in Form eines Ringes ausgebildet sein, dessen Öffnung zu dem Deformationselement ausgerichtet ist. Die ausrückbare Matrize kann ausgebildet sein, um beim Eindringen des Deformationselements auszurücken, wenn die Personenschutzvorrichtung nicht auf die hohe Steifigkeit eingestellt ist. Die ausrückbare Matrize kann so in dem Gehäuse angeordnet sein, dass eine Außenwand der ausrückbaren Matrize von einer Innenwand des Gehäuses beabstandet ist. Beim Ausrücken kann die ausrückbare Matrize durch eine Radialkraft des eindringenden Deformationselements von dem Deformationselement weggedrückt, also zu der Innenwand des Gehäuses hingedrückt werden und somit keine Verjüngung des Deformationselements bewirken. Eine solche Bewegung der ausrückbaren Matrize, die im Wesentlichen quer zur Vorschubrichtung erfolgt, wird in der vorliegenden Beschreibung als "Ausrücken" der Matrize bezeichnet. Das Ausrücken der ausrückbaren Matrize aufgrund der Radialkraft des Deformationselements kann z. B. ermöglicht werden, indem eine Stützeinrichtung für die ausrückbare Matrize entfernt oder in einer Position verändert wird. Mit dem Ausrücken kann die ausrückbare Matrize das Deformationselement für die Bewegung in der Vorschubrichtung freigeben. Für ein gleichmäßiges und gesteuertes Ausrücken kann die ausrückbare Matrize aus mehreren Segmenten zusammengesetzt sein oder gleichmäßig beabstandete Sollbruchstellen aufweisen. Die Verwendung einer ausrückbaren Matrize als Sperrelement ist von Vorteil, da diese in einer herkömmlichen adaptiven Crashstruktur ohnehin verbaut ist. So wird kein zusätzlicher Bauraum für die Installation einer separaten Sperreinrichtung benötigt.

Die vorliegende Erfindung schafft ferner ein Verfahren zum Einsetzen einer mit einer Personenschutzvorrichtung für ein Fahrzeug koppelbaren und/oder gekoppelten Fußgängerschutzeinrichtung, wobei die Personenschutzvorrichtung einen Aufprallabsorber zum Aufnehmen einer Aufprallenergie aufweist, und wobei der Aufprallabsorber eine Matrize, insbesondere eine nicht-ausrückbare Matrize, zum Aufnehmen und Deformieren eines Deformationselements bei einer Bewegung des Deformationselements in einer durch die Aufprallenergie bedingten Vorschubrichtung und ein Sperrelement zum Sperren der Bewegung des Deformationselements aufweist, und wobei das Verfahren die folgenden Schritte aufweist:
Deaktivieren des Sperrelements, um das Deformationselement freizugeben; und
Aktives Bewegen des Deformationselements um einen vorbestimmten Weg in der Vorschubrichtung, um die Fußgängerschutzeinrichtung einzusetzen.

Das Verfahren kann z. B. in Zusammenhang mit einem Steuergerät durchgeführt werden, das mit der im Vorhergehenden erläuterten Personenschutzvorrichtung verbunden oder in diese integriert sein kann. Beispielsweise kann das Sperrelement deaktiviert werden, indem basierend auf einem Signal des Steuergeräts, z. B. einem Aufprallsignal, eine oder mehrere Stützeinrichtungen für die ausrückbare Matrize entfernt oder verschoben werden. Auch durch diese Ausführungsvariante der Erfindung in Form eines Steuergeräts kann die der Erfindung zugrunde liegende Aufgabe schnell und effizient gelöst werden.

Gemäß einer Ausführungsform kann in dem Schritt des aktiven Bewegens sich ein Betrag einer Geschwindigkeit des Bewegens des Deformationselements von einer näherungsweise einer Fahrgeschwindigkeit des Fahrzeugs entsprechenden ersten Geschwindigkeit auf eine zweite Geschwindigkeit von näherungsweise null vermindern. Auf diese Weise kann vorteilhaft ein Abprallen des Fußgängers von dem Fahrzeug vermieden und so das Verletzungsrisiko noch weiter gesenkt werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Prinzipdarstellung zur Erläuterung einer passiven Fußgängerschutzeinrichtung für ein Fahrzeug;
- Fig. 2A bis 2C: Darstellungen im Längsschnitt eines adaptiven Aufprallabsorbers;
- Fig. 3A und 3B: Darstellungen im Längsschnitt einer Personenschutzvorrichtung gemäß einem Ausführungsbeispiel der vorliegenden Erfindung;
- Fig. 4: eine Grafik zur Darstellung einer Vorspannung einer Zugfeder als Aktuator der Personenschutzvorrichtung aus Fig. 3A und 3B;
- Fig. 5: eine Grafik zur Darstellung der Beinbeschleunigung bei einem herkömmlichen System im Vergleich zu der Personenschutzvorrichtung aus Fig. 3A und 3B;
- Fig. 6: eine Prinzipdarstellung zur Erläuterung eines aktiven Zurückziehens einer Frontstruktur mittels eines adaptiven Aufprallabsorbers mit Fußgängerschutz gemäß einem Ausführungsbeispiel der vorliegenden Erfindung;
- Fig. 7: eine Prinzipdarstellung eines Fahrzeugs mit einer Personenschutzvorrichtung gemäß einem Ausführungsbeispiel der vorliegenden Erfindung; und
- Fig. 8: ein Ablaufdiagramm eines Verfahrens zum Einsetzen einer mit einer Personenschutzvorrichtung für ein Fahrzeug koppelbaren und/oder gekoppelten Fußgängerschutzeinrichtung, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

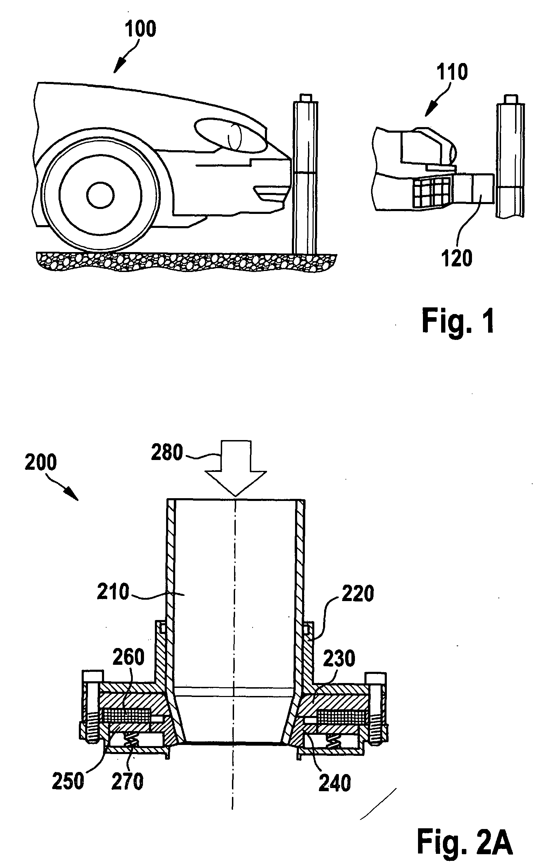

Fig. 1 zeigt eine Prinzipdarstellung zur Erläuterung einer passiven Fußgängerschutzeinrichtung für ein Fahrzeug gemäß dem Stand der Technik. Gezeigt ist ein Vorderwagen bzw. Frontend eines Fahrzeugs 100 bei einer Kollision mit einem Pfosten, der hier z. B. ein Bein eines Fußgängers repräsentiert. Links in der Zeichnung ist das Fahrzeug 100 mit Karosserie gezeigt, ein rechter Abschnitt der Zeichnung zeigt eine im Stoßfänger des Fahrzeugs 100 verborgene Struktur 110 des Fahrzeugs 100. Dabei zeigt die rechte Ansicht eine Ansicht des Fahrzeugs 100, jedoch ohne Außenblech und Stoßfänger. Die Struktur 110 ist in einem potenziellen Kontaktbereich des Fahrzeugs 100 mit einem Fußgänger installiert und weist eine Polsterung in Form eines Schaumelements 120 auf, wobei das Schaumelement 120 als eine Fußgängerschutzeinrichtung interpretiert werden kann. Bei einer Kollision mit dem Pfosten bzw. einem Fußgänger kann die Aufprallenergie durch den Schaum 120 absorbiert werden, indem der Schaum beim Crash bzw. Aufprall komprimiert wird.

Die im Nachfolgenden erläuterten adaptiven Crashstrukturen ersetzen Teile bestehender Vorderwagenstrukturen in Kraftfahrzeugen. Beispielsweise können die hierin vorgeschlagenen Strukturen die Crashbox und den vorderen Teil der Längsträger ersetzen.

Figuren 2A bis 2C erläutern anhand von Prinzipdarstellungen in Längsschnitt die Basisfunktionalität einer adaptiven Crashstruktur 200 zum Aufnehmen von Aufprallenergie. Die Darstellungen der Figuren 2A bis 2C zeigen jeweils einen Längsschnitt durch die Crashstruktur bzw. den Aufprallabsorber mit einstellbarer Steifigkeit 200, wie sie beispielsweise in einen Vorderwagen eines Fahrzeugs installiert sein kann. Die adaptive Crashstruktur 200 umfasst ein Deformationselement 210, das hier als ein Rohr ausgebildet ist, sowie ein Gehäuse 220, in dem eine feste bzw. nicht-ausrückbare Matrize 230 und eine brechbare bzw. ausrückbare Matrize 240 angeordnet sind. Ferner umfasst der Aufprallabsorber 200 einen innerhalb des Gehäuses 220 verschiebbaren Ring 250 zur Abstützung bzw. Freigabe der ausrückbaren Matrize 240, eine angrenzend an den Ring 250 angeordnete stromführende Spule 260 und ein zwischen dem Ring 250 und einer weiteren Wand des Gehäuses 220 angeordnetes Federelement 270. Eine Aufprallrichtung bzw. Vorschubrichtung 280 des Deformationselements 210 entlang seiner mittels einer Punkt-Strich-Linie gekennzeichneten Längserstreckung ist durch einen Pfeil in der Darstellung gekennzeichnet. Die Punkt-Strich-Linie markiert auch eine Mittelachse der Crashstruktur 200.

Die adaptive Crashstruktur 200 weist in erster Hinsicht zwei Steifigkeiten auf. Die Grundeinstellung der Struktur 200 ist die höhere Steifigkeit, die der eines vorderen Längsträgers des Fahrzeugs entspricht. Die zweite Einstellung, auf die umgeschaltet wird, weist eine geringere Steifigkeit auf. Ebenfalls möglich ist es, die adaptive Crashstruktur 200 weiter hinten in der Frontstruktur einzubauen, d. h. als Ersatz eines hinteren Längsträgers. Die Struktur 200 kann ebenso für das Fahrzeugheck verwendet werden, auch wenn hierin lediglich der Vorderwagen betrachtet wird.

Im Falle hoher Aufprallgeschwindigkeiten und somit hoher Kollisionsenergien ist es vorteilhaft, frühzeitig ein hohes Energieabsorptionsniveau zu erreichen, weshalb die höhere Steifigkeit als Grundeinstellung sinnvoll ist. Im Falle geringer Kollisionsenergien ist eine niedrigere Steifigkeit erforderlich, damit die Struktur 200 durch die geringere eingeleitete Kraft verformt werden kann. Dadurch ergeben sich Vorteile bei der Insassenbelastung in Form einer in der Intensität geringeren, dafür aber längeren Belastung. Die beiden Niveaus werden mithilfe eines Aktuators eingestellt.

Fig. 2A zeigt ein Schnittbild der adaptiven Crashstruktur 200 in Ruhestellung. Hier ist der innerhalb des Gehäuses verschiebbare Ring 250 zwischen der ausrückbaren Matrize 240 und einer Wand des Gehäuses 220 angeordnet, sodass die ausrückbare Matrize 240 abgestützt ist. Bei einer Kollision wird das Rohr bzw. Deformationselement 210 in die feste Matrize 230 und in die brechbare Matrize 240 geschoben und dabei stark verjüngt.

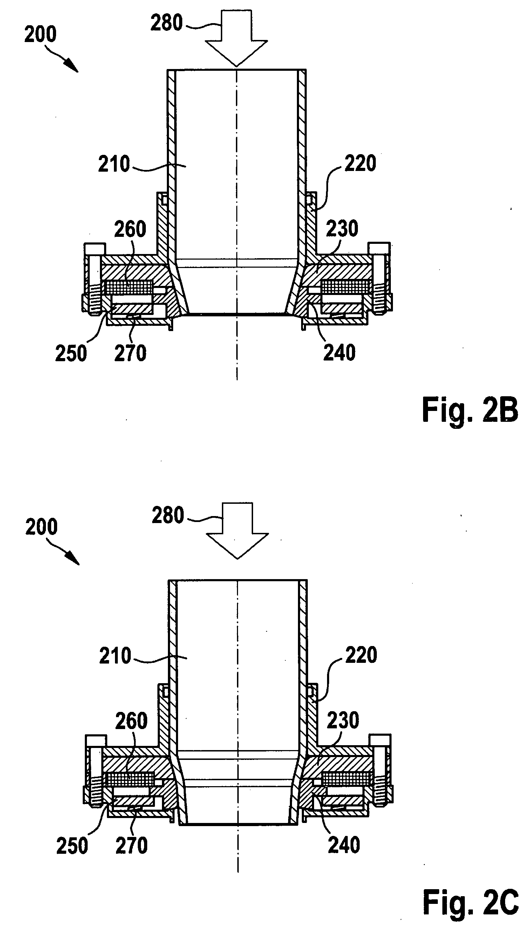

Fig. 2B zeigt ein Schnittbild der adaptiven Crashstruktur 200 in aktuierter Stellung. Hier ist der Ring 250 ansprechend auf einen Stromfluss in der Spule 260 nach unten verschoben. Kommt es nun zu einer Kollision, dringt das Rohr 210 ebenfalls in die feste Matrize 230 und in die brechbare Matrize 240 ein. Da der Ring 250 die brechbare Matrize 240 nicht abstützt, kann diese infolge der Aufprägung der Radialkraft durch das Rohr 210 brechen, z. B. an Sollbruchstellen, und ausrücken. Ein Verjüngungsgrad des Rohrs 210 ist somit verglichen mit der in Fig. 2A gezeigten Grundeinstellung geringer.

Fig. 2C zeigt ein Schnittbild der adaptiven Crashstruktur 200 im Kollisionsfall, und zwar bei weicher Einstellung, also niedriger Steifigkeit, wie sie anhand der Darstellung in Fig. 2B erläutert ist.

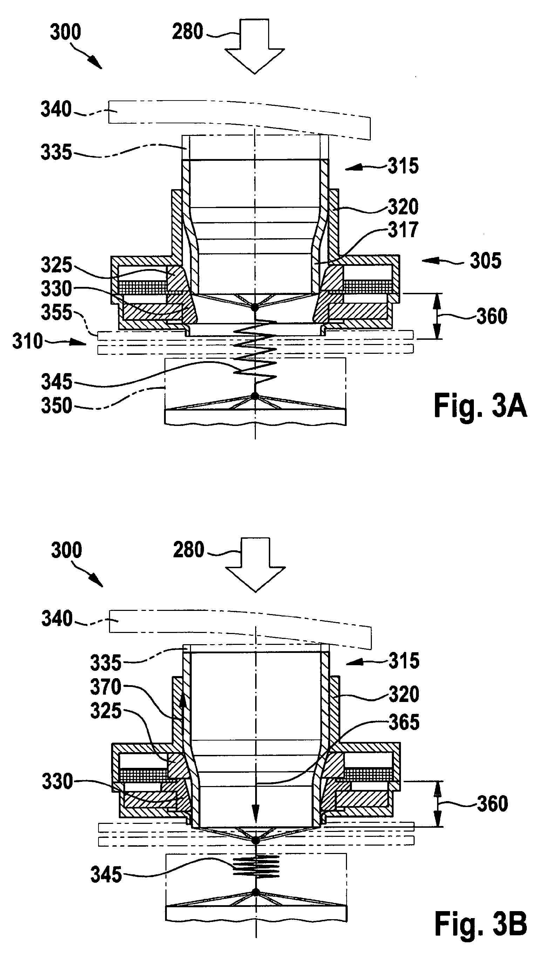

Figuren 3A und 3B erläutern ebenfalls anhand von Längsschnittdarstellungen eine Funktionalität einer Personenschutzvorrichtung 300 in Form einer adaptiven Crashstruktur mit aktivem Fußgängerschutz gemäß einem Ausführungsbeispiel der vorliegenden Erfindung. Es sind zwei Schaltzustände der Personenschutzvorrichtung 300 dargestellt, und zwar zeigt Fig. 3A die Struktur 300 vor einer Kollision und Fig. 3B die Struktur 300 nach der Kollision. Bei der anhand der Darstellungen gezeigten Kollision handelt es sich um einen simulierten Aufprall eines Fußgängers auf ein Fahrzeug unter Verwendung eines Beinimpaktors.

Fig. 3A zeigt die Personenschutzvorrichtung 300 in Ruhestellung vor einem Aufprall, in der sie auf die hohe Steifigkeit eingestellt ist. Die Personenschutzvorrichtung 300 kann beispielsweise in einen Vorderwagen eines Fahrzeugs installiert sein und Teile eines Frontends des Fahrzeugs umfassen bzw. mit diesen verbunden sein.

Die Personenschutzvorrichtung 300 umfasst einen adaptiven Aufprallabsorber 305 und eine Fußgängerschutzeinrichtung 310. Der Aufprallabsorber 305 entspricht in Anordnung und Funktion der Elemente im Wesentlichen der anhand der Figuren 2A, 2B und 2C erläuterten Crashstruktur und umfasst ein Deformationselement 315 mit einem vorverjüngten Bereich 317, ein Gehäuse 320, eine primäre bzw. nicht-ausrückbare Matrize 325 und eine sekundäre bzw. ausrückbare Matrize 330. Bei dem in den Figuren 3A und 3B gezeigten Ausführungsbeispiel der Personenschutzvorrichtung 300 bildet die ausrückbare Matrize 330 ein Sperrelement der Personenschutzvorrichtung 300, indem sie in der in Fig. 3A gezeigten nicht ausgerückten Position eine Bewegung des Rohres 315 in der Vorschubrichtung 280 verhindert, da ein lichtes Maß der ausrückbaren Matrize in der nicht ausgerückten Position geringer als eine Querschnitt des vorverjüngten Bereichs des Deformationselements 315 ist. Alternativ kann auch ein anderes Element der Personenschutzvorrichtung 300 das Sperrelement 330 bilden.

An einem in der Vorschubrichtung 280 hinteren Ende ist das Deformationselement 315 mit einem elastischen Element 335 verbunden. Über das elastische Element 335 ist das Deformationselement 315 und damit der Aufprallabsorber 305 mit einem Querträger 340 des Fahrzeugs gekoppelt. Das elastische Element 335 und der Querträger 340 sind in der Darstellung in Fig. 3A in Strichlinien bzw. Strich-Punkt-Linien dargestellt, da aus Gründen der Übersichtlichkeit das Deformationselement 315 stark verkürzt dargestellt ist und sich somit die Elemente 335 und 340 in der Realität nicht in der in den Figuren 3A und 3B gezeigten Position befinden. Über Befestigungseinrichtungen ist ein Aktuator 345 der Fußgängerschutzeinrichtung 310 zwischen das Deformationselement 315 und einen hinteren Längsträger 350 des Fahrzeugs geschaltet. Anstelle des hinteren Längsträgers 350 kann auch ein anderes Element einer Crashstruktur eines Fahrzeugs als Befestigungspunkt für den Aktuator 345 dienen. Ein in der Vorschubrichtung 280 vorderer Bereich des Gehäuses 320 der adaptiven Crashstruktur 305 liegt an einer Ablenkplatte 355 an, die hier ebenfalls in Strichlinien dargestellt ist.

Bei dem in den Figuren 3A und 3B gezeigten Ausführungsbeispiel der Personenschutzvorrichtung 300 handelt es sich bei dem Aktuator 345 um eine Zugfeder. In der in der Fig. 3A gezeigten Ruhestellung der Personenschutzvorrichtung 300 liegt das vorverjüngte Rohr 315 auf der unteren, also der ausrückbaren, Matrize 330 auf. Die mit einem Ende an dem vorverjüngten Bereich 317 des Deformationselements 315 und mit dem gegenüberliegenden Ende an dem Längsträger 350 befestigte Feder 345 ist mit einer vorbestimmten Kraft über einen vordefinierten Weg vorgespannt. Damit ist in der Feder 345 eine potenzielle Energie zur Bewegung des Deformationselements 315 und der mit diesem gekoppelten Elemente gespeichert. Ein Doppelpfeil in der Darstellung kennzeichnet einen auf der Vorspannung der Feder 345 basierenden möglichen Verschiebeweg 360 des Deformationselements 315, der bei dem hier gezeigten Ausführungsbeispiel 22,5 mm beträgt.

Fig. 3B zeigt die Personenschutzvorrichtung 300 aus Fig. 3A nach dem Crash bzw. Aufprall. Im Folgenden werden Ereignisse erläutert, die zu dem in Fig. 3A dargestellten Zustand der Personenschutzvorrichtung 300 führen.

Basierend auf einer Detektion eines Crashs mit einem Fußgänger wird die untere Matrize 330 zum Ausrücken freigegeben. Wie die Darstellung in Fig. 3B zeigt, wird hier das Signal zum Ausrücken durch eine Deformation des elastischen Elementes 335 als Teil eines bestehenden ACS-Systems oder einer Precrash-Sensorik ausgelöst. Durch die starke Vorspannung des auf der unteren Matrize 330 aufliegenden Rohres 315 wird die Matrize 330 deformiert und radial nach außen gedrückt. Durch die Vorspannung der Feder 345 wird anschließend das Rohr 315 in sehr kurzer Zeit um den vorbestimmten Weg 360 in der Vorschubrichtung 280 bewegt, also vom Ort des Crashs weg nach hinten gezogen. Durch das Nach-Hinten-Ziehen des Rohrs 315 durch die Feder 345 wird die mit dem Deformationselement 315 gekoppelte Frontstruktur des Fahrzeugs, hier durch den Querträger 340 gekennzeichnet, mit einer vorbestimmten Geschwindigkeit ebenfalls nach hinten bewegt. Damit wird ein mit der Fronstruktur 340 kollidierende Fußgänger langsamer verzögert und die Verletzungsschwere gemindert.

Einer durch einen in der Darstellung in Fig. 3B nach unten gerichteten Pfeil gekennzeichneten Zugkraft 365 der Zugfeder 345 wirkt eine durch einen nach oben gerichteten Pfeil symbolisierte Reibung 370 des Rohres 315 an einer Wand des Gehäuses 320 entgegen, wenn ein auf den vorverjüngten Bereich folgender nicht verjüngter Bereich des Deformationselements 315 die nicht-ausrückbare Matrize 325 passiert.

Die Darstellung in Fig. 3B macht ebenfalls deutlich, dass - im Vergleich zum Ursprungszustand der Personenschutzvorrichtung 300 - weiterhin das Schaumpolster bzw. elastische Element 335 vor dem Querträger 340 nach dem Crash deutlich dünner ist, also komprimiert wurde. Die Kombination aus dem Rückziehen der Struktur 340 und einer gedämpften Ankopplung des Beinimpaktors an die Fahrzeugbewegung führt zu einer deutlich geringeren Belastung.

Alternativ zu der anhand der Figuren 3A und 3B beschriebenen Ausführung der Personenschutzvorrichtung 300 kann auch eine aktive Ansteuerung und Bewegung der ausrückbaren Matrize 330 erfolgen. Dabei wird, sollte eine Fußgängerkollision detektiert werden, die untere Matrize 330 aktiv wegbewegt und damit die Feder 345 aktiviert.

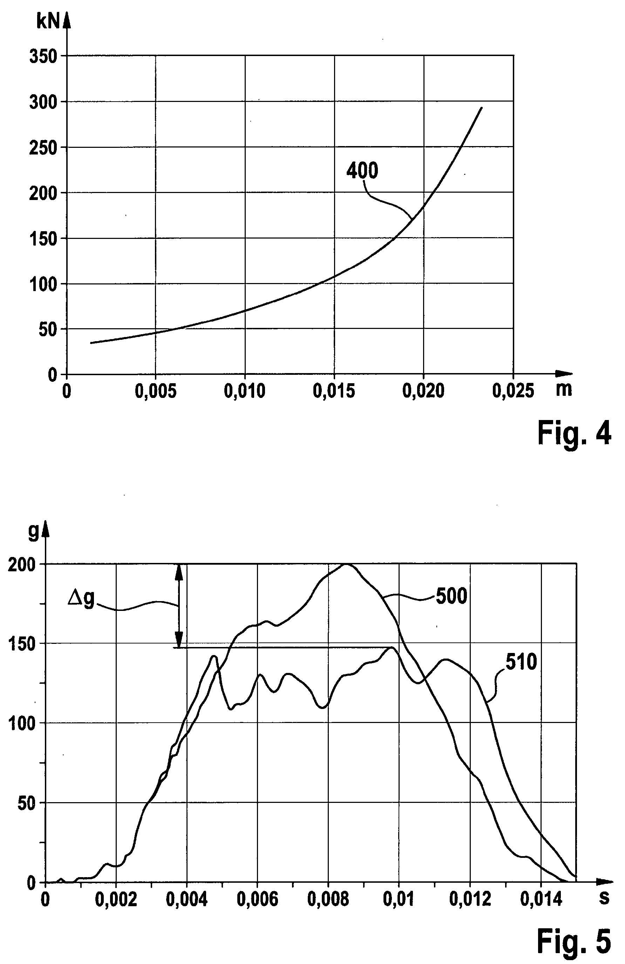

Fig. 4 zeigt eine Grafik zur Darstellung einer Vorspannung der Zugfeder des adaptiven Aufprallabsorbers mit Fußgängerschutz aus Figuren 3A und 3B. Gezeigt ist ein Koordinatensystem, bei dem auf der Abszisse ein Verschiebeweg des Deformationselements in Metern aufgetragen ist und auf der Ordinate eine Federkraft in Kilo-Newton aufgetragen ist. Eine Kurve 400 kennzeichnet eine Ausbildung des Zusammenhangs zwischen einer Kraft und einem Weg, wobei eine Länge des möglichen Verschiebeweges in Abhängigkeit der aufgewendeten Vorspannungskraft überproportional steigt. Aus der Darstellung in Fig. 4 ist ersichtlich, dass die Feder im Ruhezustand der Personenschutzvorrichtung eine Vorspannung von etwa 300 Kilo-Newton aufweist, um den in den Figuren 3A und 3B angegebenen vordefinierten Verschiebeweg von 22,5 mm zu ermöglichen. Damit ist in der Feder eine potenzielle Energie gespeichert.

Denkbar und in den Figuren nicht gezeigt sind auch elektrische, magnetische, hydraulische, pneumatische oder keramische Energiespeicher oder Druckspeicher, die z. B. über Generatoren angesteuert werden. Durch einen Einsatz von ein- und ausfahrbaren Stiften kann z. B. auch die Kraft-Weg-Charakteristik von Federn beeinflusst werden und z. B. auf die Eigenschaften eines kollidierenden Fußgängers angepasst werden. Analoges gilt für die anderen Systemumsetzungen.

Fig. 5 zeigt eine Grafik eines Versuchs zum Vergleich der Beinbeschleunigung mit einem herkömmlichem passiven System und dem hier beschriebenen aktiven System der in den Figuren 3A und 3B gezeigten Personenschutzvorrichtung. Gezeigt ist ein Koordinatensystem, bei dem auf der Abszisse die Zeit in Sekunden und auf der Ordinate die Beinbeschleunigung in der Einheit eines Vielfachen der Erdbeschleunigung aufgetragen ist. Ein Graph 500 kennzeichnet einen Verlauf der Beinbeschleunigung über die Zeit bei einem passiven Fußgängerschutz, und ein Graph 510 kennzeichnet einen Verlauf der Beinbeschleunigung über die Zeit bei der hierin vorgestellten Fußgängerschutzeinrichtung. Ein Bereich zwischen einer Untergrenze von 150 g und einer Obergrenze von 200 g repräsentiert eine Spitzenbelastung bei einer Kollision eines Fußgängerbeines mit einem Fahrzeug. Ein Doppelpfeil kennzeichnet einen Beinbeschleunigungsanstieg Δg von 52 g. Aus der Grafik in Fig. 5 ist ersichtlich, dass bei Verwendung des hier vorgeschlagenen aktiven Systems die Beinbeschleunigung unterhalb der Spitzenbelastung bleibt, sich aber über einen längeren Zeitraum erstreckt, als es bei dem herkömmlichen System der Fall ist. Bei passiven Systemen wird wie bereits erläutert der Fußgängerschutz z. B. durch Deformation der Frontendstruktur realisiert. Durch die hier vorgestellte aktive Crashstruktur im Bereich des Querträgers kann die Belastung, durch das aktive Zurückziehen der Frontendstruktur, für den Fußgänger herabgesetzt werden. Wesentlich dafür ist der eingangs beschriebene Massenträgheitseffekt der beschleunigten Frontstruktur.

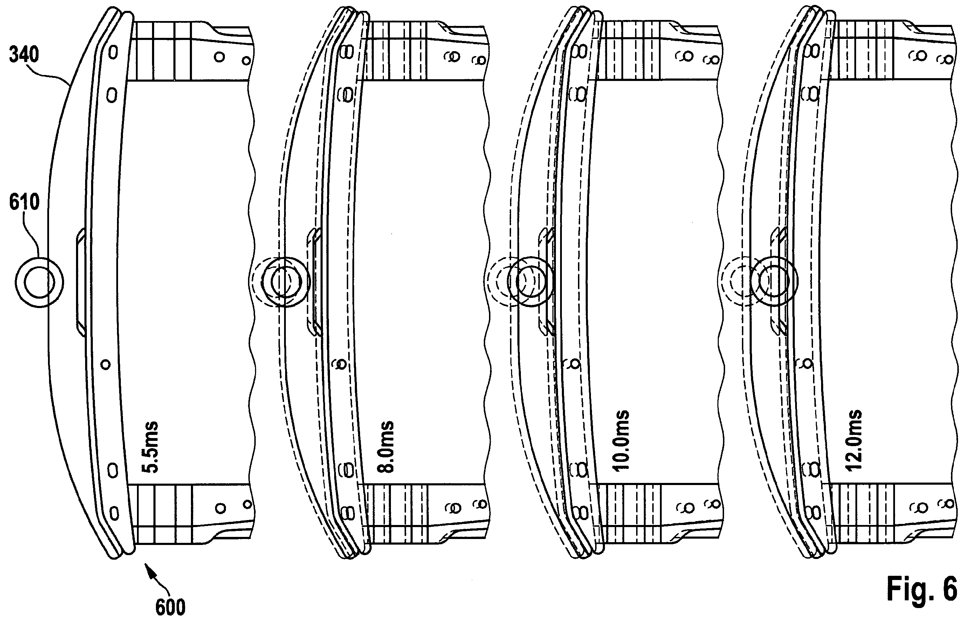

Fig. 6 zeigt anhand einer Darstellung von Momentzuständen über einen vorbestimmten Zeitverlauf das Zurückziehen einer Frontstruktur 600 mit dem Querträger 340 bei einem Einsatz des hierin vorgestellten aktiven Fußgängerschutzes im direkten Vergleich zu einem passiven System. Die Darstellung in Fig. 6 zeigt die Frontstruktur 600 im Kontakt zu einem Bein eines Fußgängers repräsentierenden Beinimpaktor 610 zu Zeitpunkten 5,5 ms, 8,0 ms, 10 ms und 12 ms nach einer Kollision. Dabei kennzeichnen durchgezogenen Linien Positionen der Frontstruktur 600 bei Verwendung der hier vorgestellten aktiven Fußgängerschutzeinrichtung und Strichlinien Positionen der Frontstruktur 600 bei Verwendung einer passiven Standardstruktur.

Wesentliche Randbedingungen für einen oder mehrere erforderliche Aktuatoren zum Zurückziehen der gesamten Frontstruktur 600 sind zum einen die zur Verfügung gestellte Energie und zum anderen die Abrufcharakteristik dieser Energie, d. h. Zeit, Ablauf, usw. Die Speicherung der Energie in der vorgespannten Feder ist nur eine Möglichkeit, eine derartige Zusatzaktuatorik darzustellen. Beispielsweise kann die schlagartig notwendige Energie zum Rückziehen des Rohrs inklusive des Vorbaus in Form des Querträgers 340, des Schaums, usw. in einer alternativen Auslegung auch über eine pyrotechnische Energiequelle bereitgestellt werden. Entsprechend würde aus der Federaktuatorik eine pyrotechnische Aktuatorik.

Gemäß der Darstellung in Fig. 6 sieht die günstige, mittels der durchgezogenen Linien skizzierte, Charakteristik bei Verwendung der aktiven Struktur so aus, dass zum Zeitpunkt des Kontakts die Relativgeschwindigkeit zwischen Fußgängerbein 610 und Frontstruktur 600 möglichst gering ist. Optimalerweise entspricht hier die Rückzugsgeschwindigkeit näherungsweise der Fahrzeuggeschwindigkeit. Allerdings kann auch schon bei anderen Rückzugsgeschwindigkeiten ein förderlicher Effekt erreicht werden. Im weiteren Verlauf wird nun die Rückzugsgeschwindigkeit vermindert, bis sie null ist. Dadurch wird erreicht, dass der Fußgänger 610 nicht stoßartig mit dem Fahrzeug kollidiert und auf die Fahrzeuggeschwindigkeit beschleunigt wird, sondern dass dieser Prozess gemächlicher, mit entsprechend niedrigeren auftretenden Kräften und somit einem geringeren Verletzungsrisiko erfolgt. Dies wird auch durch die Formel für den Kraftstoß aufgezeigt: F*t=m*v. Da der Impuls m*v konstant ist, kann durch Verlängerung der Kontaktzeit t die auftretende Kraft F vermindert werden.

Ein weiterer positiver Aspekt ist, dass durch dieses Vorgehen die Abprallgeschwindigkeit des Fußgängers 610 vermindert wird. Damit wird auch die große Gefahr eines Sekundäraufpralls vermindert. Bei dem Sekundäraufprall handelt es sich z. B. um einen Kontakt des nach der Primärkollision mit dem Fahrzeug weggeschleuderten Fußgängers 610 mit einem anderen Objekt wie beispielsweise einer Straße oder einem anderen Fahrzeug. Im günstigsten Fall kann erreicht werden, dass die Kollision total inelastisch abläuft, d. h. kein Abprallen erfolgt.

Das Verhalten der adaptiven Struktur bei normalen Crashs - ohne Fußgängerbeteiligung - bleibt unberührt von der hier beschriebenen Vorrichtung zum Fußgängerschutz.

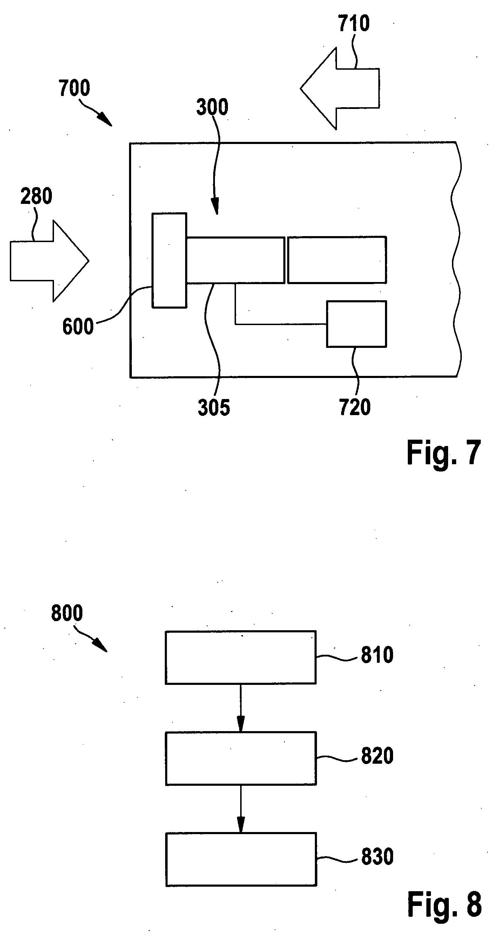

Fig. 7 zeigt eine Prinzipdarstellung eines Fahrzeugs 700 mit der adaptiven Personenschutzvorrichtung 300 mit Fußgängerschutz aus den Figuren 3A und 3B. Die Personenschutzvorrichtung 300 setzt sich aus der Frontstruktur 600 und dem adaptiven Aufprallabsorber 305 zusammen und ersetzt hier den vorderen Längsträger. Ein Pfeil kennzeichnet eine Fahrtrichtung 710 des Fahrzeugs 700. Ein weiterer Pfeil kennzeichnet die Vorschubrichtung 280, in der bei einer Kollision des Fahrzeugs 700 mit einem Fußgänger die Aufprallenergie zu absorbieren ist. Über ein Leitungssystem, z. B. einen CAN-Bus, ist die Personenschutzvorrichtung 300 mit einem Steuergerät 720 des Fahrzeugs 700 gekoppelt. Das Steuergerät 720 empfängt bei einem Crash des Fahrzeugs 700 ein Aufprallsignal und gibt basierend darauf z. B. ein Signal zum Freigeben der ausrückbaren Matrize des Aufprallabsorbers 305 aus, um den Fußgängerschutz der Vorrichtung 300 zu aktivieren.

Fig. 8 zeigt ein Ablaufdiagramm eines Ausführungsbeispiels eines Verfahrens 800 zum Einsetzen einer mit einer Personenschutzvorrichtung für ein Fahrzeug koppelbaren und/oder gekoppelten Fußgängerschutzeinrichtung, wie sie im Vorhergehenden ausführlich erläutert wurde. Das Verfahren 800 wird in Zusammenhang mit einem Steuergerät des Fahrzeugs, das mit der Personenschutzvorrichtung elektrisch verbunden ist, durchgeführt, wobei die Personenschutzvorrichtung einen Aufprallabsorber zum Aufnehmen einer Aufprallenergie und ein Sperrelement zum Sperren der Bewegung eines Deformationselemerits des Aufprallabsorbers aufweist.

In einem Schritt 810 erfasst eine Sensorik des Fahrzeugs eine Kollision mit einem Fußgänger und gibt ein Aufprallsignal an ein Steuergerät des Fahrzeugs aus. In einem folgenden Schritt 820 gibt das Steuergerät einen Befehl zum Deaktivieren des Sperrelements an die Personenschutzvorrichtung aus, um das Deformationselement für die Bewegung freizugeben. Das Deformationselement wird in einem folgenden Schritt 830 mittels eines Aktuators aktiv in der Vorschubrichtung der Personenschutzvorrichtung bewegt, um den Aufprall des Fußgängers auf das Fahrzeug zu verzögern und so das Verletzungsrisiko zu mindern.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Personenschutzvorrichtung (300) für ein Fahrzeug (700), mit einem Aufprallabsorber (305) zum Aufnehmen einer Aufprallenergie, wobei der Aufprallabsorber eine Matrize (325) zum Aufnehmen und Deformieren eines Deformationselements (315) bei einer Bewegung des Deformationselements in einer durch die Aufprallenergie bedingten Vorschubrichtung (280) und ein Sperrelement (330) zum Sperren der Bewegung des Deformationselements aufweist, **dadurch gekennzeichnet, dass** die Personenschutzvorrichtung das folgende Merkmal aufweist:
eine mit dem Deformationselement koppelbare Fußgängerschutzeinrichtung (310), die ausgebildet ist, um basierend auf einer Deaktivierung des Sperrelements das Deformationselement um einen vorbestimmten Weg (360) in der Vorschubrichtung aktiv zu bewegen.

2. Personenschutzvorrichtung (300) gemäß Anspruch 1, **dadurch gekennzeichnet, dass** das Deformationselement (315) einen vorverjüngten Bereich (317) aufweist, wobei eine Länge des vorverjüngten Bereichs einer Länge des vorbestimmten Weges (360) entspricht, und wobei ein Durchmesser des Deformationselements in dem vorverjüngten Bereich geringer als ein lichtes Maß der Matrize (325) ist.

3. Personenschutzvorrichtung (300) gemäß Anspruch 1 oder 2, **dadurch gekennzeichnet, dass** die Fußgängerschutzeinrichtung (310) einen Aktuator (345) aufweist, der ausgebildet ist, um dauerhaft eine Bewegungskraft zum Bewegen des Deformationselements (315) um den vorbestimmten Weg (360) auf das Deformationselement auszuüben.

4. Personenschutzvorrichtung (300) gemäß Anspruch 3, **dadurch gekennzeichnet, dass** der Aktuator (345) eine Zugfeder ist, wobei ein erstes Ende der Zugfeder an dem Deformationselement (315) befestigbar ist und ein zweites Ende der Zugfeder unter Erzeugung einer Zugspannung an einem in der Vorschubrichtung (280) dem Deformationselement vorgelagerten Element (350) der Personenschutzvorrichtung befestigbar ist, und wobei ein Federweg der Zugfeder im befestigten Zustand dem vorbestimmten Weg (360) des Deformationselements entspricht.

5. Personenschutzvorrichtung (300) gemäß Anspruch 4, **dadurch gekennzeichnet, dass** die Fußgängerschutzeinrichtung (310) ferner mindestens einen Stift aufweist, der so bezüglich der Feder anordenbar ist, dass er bei einer Deaktivierung des Sperrelements (330) eine Kraft-Weg-Charakteristik der Feder auf eine vorbestimmte Weise beeinflusst.

6. Personenschutzvorrichtung (300) gemäß Anspruch 1, **dadurch gekennzeichnet, dass** die Fußgängerschutzeinrichtung (310) einen Aktuator (345) aufweist, der ausgebildet ist, um ansprechend auf eine Aktuierung eine Bewegungskraft zum Bewegen des Deformationselements (315) um den vorbestimmten Weg (360) auf das Deformationselement auszuüben.

7. Personenschutzvorrichtung (300) gemäß einem der vorangegangenen Ansprüche, **dadurch gekennzeichnet, dass** das Sperrelement (330) eine ausrückbare Matrize ist, die ausgebildet ist, um deaktiviert zu werden, indem sie ansprechend auf ein Aufprallsignal zum Ausrücken freigegeben wird.

8. Verfahren (800) zum Einsetzen einer mit einer Personenschutzvorrichtüng (300) für ein Fahrzeug (700) koppelbaren und/oder gekoppelten Fußgängerschutzeinrichtung (310), wobei die Personenschutzvorrichtung einen Aufprallabsorber (305) zum Aufnehmen einer Aufprallenergie aufweist, und wobei der Aufprallabsorber eine Matrize (325) zum Aufnehmen und Deformieren eines Deformationselements (315) bei einer Bewegung des Deformationselements in einer durch die Aufprallenergie bedingten Vorschubrichtung (280) und ein Sperrelement (330) zum Sperren der Bewegung des Deformationselements aufweist, und wobei das Verfahren die folgenden Schritte aufweist:
Deaktivieren (820) des Sperrelements, um das Deformationselement freizugeben; und
Aktives Bewegen (830) des Deformationselements um einen vorbestimmten Weg (360) in der Vorschubrichtung, um die Fußgängerschutzeinrichtung einzusetzen.

9. Verfahren (800) gemäß Anspruch 8, **dadurch gekennzeichnet, dass** in dem Schritt (830) des aktiven Bewegens sich ein Betrag einer Geschwindigkeit des Bewegens des Deformationselements (315) von einer näherungsweise einer Fahrgeschwindigkeit des Fahrzeugs (700) entsprechenden ersten Geschwindigkeit auf eine zweite Geschwindigkeit von näherungsweise null vermindert.

10. Steuergerät (720), das Einheiten aufweist, die ausgebildet sind, um die Schritte eines Verfahrens (800) gemäß Anspruch 8 oder 9 durchzuführen.

11. Computer-Programmprodukt mit Programmcode zur Durchführung eines Verfahrens (800) nach Anspruch 8 oder 9, wenn das Programm auf einem Steuergerät (720) ausgeführt wird.

## Claims

1. Passenger protection device (300) for a vehicle (700), comprising an impact absorber (305) for absorbing impact energy, wherein the impact absorber has a cavity (325) for receiving and deforming a deformation element (315) during a movement of the deformation element in an advancing direction (280), which is determined by the impact energy, and a blocking element (330) for blocking the movement of the deformation element, **characterized in that** the passenger protection device comprises the following feature:
a pedestrian protection device (310), which can be coupled to the deformation element and is designed to actively move the deformation element by a specified displacement (360) in the advancing direction on the basis of a deactivation of the blocking element.

2. Passenger protection device (300) according to Claim 1, **characterized in that** the deformation element (315) has a pretapered region (317), wherein a length of the pretapered region corresponds to a length of the predetermined displacement (360), and wherein a diameter of the deformation element in the pretapered region is less than a clearance of the cavity (325).

3. Passenger protection device (300) according to Claim 1 or 2, **characterized in that** the pedestrian protection device (310) has an actuator (345), which is designed to continually exert a force of motion on the deformation element for moving the deformation element (315) by the predetermined displacement (360).

4. Passenger protection device (300) according to Claim 3, **characterized in that** the actuator (345) is a tension spring, wherein a first end of the tension spring can be fastened to the deformation element (315) and a second end of the tension spring can be fastened to an element (350) of the passenger protection device that is situated upstream of the deformation element in the advancing direction (280), generating a tensile stress, and wherein a spring excursion of the tension spring in the fastened state corresponds to the predetermined displacement (360) of the deformation element.

5. Passenger protection device (300) according to Claim 4, **characterized in that** the pedestrian protection device (310) also has at least one pin, which can be arranged with respect to the spring in such a way that it influences a force-displacement characteristic of the spring in a predetermined manner when the blocking element (330) is deactivated.

6. Passenger protection device (300) according to Claim 1, **characterized in that** the pedestrian protection device (310) has an actuator (345), which is designed to exert a force of motion on the deformation element for moving the deformation element (315) by the predetermined displacement (360) in response to an actuation.

7. Passenger protection device (300) according to one of the preceding claims, **characterized in that** the blocking element (330) is a disengageable cavity, which is designed to be deactivated by being enabled to disengage in response to an impact signal.

8. Method (800) for using a pedestrian protection device (310) which can be coupled and/or is coupled to a passenger protection device (300) for a vehicle (700), wherein the passenger protection device has an impact absorber (305) for absorbing impact energy, and wherein the impact absorber has a cavity (325) for receiving and deforming a deformation element (315) during a movement of the deformation element in an advancing direction (280), which is determined by the impact energy, and a blocking element (330) for blocking the movement of the deformation element, and wherein the method has the following steps:
deactivating (820) the blocking element in order to enable the deformation element; and
actively moving (830) the deformation element by a predetermined displacement (360) in the advancing direction in order to use the pedestrian protection device.

9. Method (800) according to Claim 8, **characterized in that**, in the step (830) of actively moving the deformation element, a magnitude of a speed of the movement of the deformation element (315) is reduced from a first speed, which approximately corresponds to a travelling speed of the vehicle (700), to a second speed, which is approximately zero.

10. Control device (720), which has units that are designed to carry out the steps of a method (800) according to Claim 8 or 9.

11. Computer program product with program code for carrying out a method (800) according to Claim 8 or 9 when the program is run on a control device (720).

## Revendications

1. Dispositif de protection des personnes (300) pour un véhicule (700), avec un absorbeur de collision (305) destiné à reprendre une énergie de collision, dans lequel l'absorbeur de collision présente une matrice (325) destinée à contenir et à déformer un élément déformable (315) lors d'un mouvement de l'élément déformable dans une direction d'avancement (280) imposée par l'énergie de collision et un élément d'arrêt (330) destiné à arrêter le mouvement de l'élément déformable, **caractérisé en ce que** le dispositif de protection des personnes présente la caractéristique suivante:
un dispositif de protection des piétons (310), pouvant être couplé à l'élément déformable, qui est configuré pour, sur la base d'une désactivation de l'élément d'arrêt, déplacer activement l'élément déformable d'une course prédéterminée (360) dans la direction d'avancement.

2. Dispositif de protection des personnes (300) selon la revendication 1, **caractérisé en ce que** l'élément déformable (315) présente une région prérétrécie (317), dans lequel une longueur de la région prérétrécie correspond à une longueur de la course prédéterminée (360), et dans lequel un diamètre de l'élément déformable dans la région prérétrécie est inférieur à une dimension libre de la matrice (325).

3. Dispositif de protection des personnes (300) selon la revendication 1 ou 2, **caractérisé en ce que** le dispositif de protection des piétons (310) présente un actionneur (345), qui est conçu de façon à exercer en permanence sur l'élément déformable une force de mouvement pour déplacer l'élément déformable (315) de la course prédéterminée (360).

4. Dispositif de protection des personnes (300) selon la revendication 3, **caractérisé en ce que** l'actionneur (345) est un ressort de traction, dans lequel une première extrémité du ressort de traction peut être fixée à l'élément déformable (315) et une deuxième extrémité du ressort de traction peut être fixée, en produisant une contrainte de traction, à un élément (350) du dispositif de protection des personnes disposé avant l'élément déformable dans la direction d'avancement (280), et dans lequel une course élastique du ressort de traction correspond dans l'état fixé à la course prédéterminée (360) de l'élément déformable.

5. Dispositif de protection des personnes (300) selon la revendication 4, **caractérisé en ce que** le dispositif de protection des piétons (310) présente en outre au moins une tige, qui peut être disposée par rapport au ressort de telle manière que, lors d'une désactivation de l'élément d'arrêt (330), elle influence une caractéristique force-course du ressort d'une manière prédéterminée.

6. Dispositif de protection des personnes (300) selon la revendication 1, **caractérisé en ce que** le dispositif de protection des piétons (310) présente un actionneur (345), qui est conçu de façon à exercer sur l'élément déformable, en réponse à un actionnement, une force de mouvement pour déplacer l'élément déformable (315) de la course prédéterminée (360).

7. Dispositif de protection des personnes (300) selon l'une quelconque des revendications précédentes, **caractérisé en ce que** l'élément d'arrêt (330) est une matrice extractible, qui est conçue de façon à être désactivée, du fait qu'elle est libérée pour son extraction en réponse à un signal de collision.

8. Procédé (800) pour l'utilisation d'un dispositif de protection des piétons (310) pouvant être et/ou étant couplé à un dispositif de protection des personnes (300) pour un véhicule (700), dans lequel le dispositif de protection des personnes présente un absorbeur de collision (305) destiné à reprendre une énergie de collision, et dans lequel l'absorbeur de collision présente une matrice (325) destinée à contenir et déformer un élément déformable (315) lors d'un mouvement de l'élément déformable dans une direction d'avancement (280) imposée par l'énergie de collision et un élément d'arrêt (330) destiné à arrêter le mouvement de l'élément déformable, et dans lequel le procédé présente les étapes suivantes:
- désactiver (820) l'élément d'arrêt, afin de libérer l'élément déformable; et
- déplacer activement (830) l'élément déformable d'une course prédéterminée (360) dans la direction d'avancement, afin d'activer le dispositif de protection des piétons.

9. Procédé (800) selon la revendication 8, **caractérisé en ce que**, dans l'étape (830) de déplacement actif, une valeur d'une vitesse du déplacement de l'élément déformable (315) diminue d'une première vitesse correspondant approximativement à une vitesse de roulage du véhicule (700) à une deuxième vitesse approximativement nulle.

10. Appareil de commande (720), qui présente des unités qui sont conçues de façon à exécuter les étapes d'un procédé (800) selon la revendication 8 ou 9.

11. Produit de programme informatique avec un code de programme destiné à l'exécution d'un procédé (800) selon la revendication 8 ou 9, lorsque le programme est exécuté sur un appareil de commande (720).
